# EUROPÄISCHE PATENTANMELDUNG

(11) **EP 1 813 417 A1**
(43) Veröffentlichungstag der Anmeldung: **01.08.2007**
(21) Anmeldenummer: 07000954.3
(22) Anmeldetag: 18.01.2007
(51) Int. Cl.: B29C 65/20

(54) **Verfahren und Vorrichtung zum Verschweißen von Kunststoffplatten mit winklig dazu angeordneten Kunststofflamellenpaketen**

(30) Priorität: 27.01.2006 DE 102006003889
(71) Anmelder: Munters Euroform GmbH, 52068 Aachen (DE)
(72) Erfinder: Blitz, Klaus, 52074 Aachen (DE); Wahlen, Günter, 52146 Würselen (DE); Kurtisi, Sebastian, 52064 Aachen (DE)
(74) Vertreter: Hauck Patent- und Rechtsanwälte

(57) **Zusammenfassung**

Es werden ein Verfahren und eine Vorrichtung zum Verschweißen von Kunststoffplatten (4) mit winklig dazu angeordneten Kunststofflamellenpaketen (3) von Tropfenabscheidereinheiten und dergleichen Einheiten beschrieben. Das Verfahren und die Vorrichtung zeichnen sich dadurch aus, dass die Enden der Lamellen (7) und die Kunststoffplatte (4) mit Hilfe einer Schweißplatte (1) auf die Schweißtemperatur erhitzt bzw. angeschmolzen und dann gegeneinander gepresst werden. Mit diesem Verfahren kann besonders einfach, rasch und wirtschaftlich gearbeitet werden.

## Beschreibung

Die vorliegende Erfindung betrifft ein Verfahren zum Verschweißen von Kunststoffplatten mit winklig dazu angeordneten Kunststofflamellenpaketen von Tropfenabscheidereinheiten und dergleichen Einheiten.

Es ist ein Verfahren zum Verschweißen von Kunststoffteilen bekannt, das als Spiegelschweißen bezeichnet wird und bei dem die zu verbindenden Flächen an einer geheizten Platte bis über den Schmelzpunkt erwärmt und hierauf durch Zusammenpressen stumpfgeschweißt werden. Dieses Verfahren findet insbesondere bei gut schweißbaren thermoplastischen Kunststoffen, wie Polyethylen, Polypropylen und Polyamid, Verwendung. Es wird insbesondere zum Verschweißen von koaxial angeordneten Elementen, wie beispielsweise Rohrstücken, eingesetzt.

Bei Filteranlagen finden Tropfenabscheidereinheiten Verwendung, die aus einer Vielzahl von parallel zueinander angeordneten Tropfenabscheiderlamellen bestehen, welche an entsprechenden Trägerplatten, Randplatten etc. befestigt sind. Sowohl die Lamellen als auch die Platten bestehen aus Kunststoff und werden manuell miteinander verschweißt, wobei die Lamellen winklig mit den Platten verbunden werden. Der Schweißvorgang erfolgt dabei manuell, da er aufgrund der Vielzahl der parallel zueinander angeordneten Lamellen nur schwierig durchzuführen ist. Eine automatische Durchführung des Schweißverfahrens ist bisher nicht bekannt.

Der Erfindung liegt die Aufgabe zugrunde, ein Verfahren zum Verschweißen von Kunststoffplatten mit winklig dazu angeordneten Kunststofflamellenpaketen von Tropfenabscheidereinheiten und dergleichen Einheiten zu schaffen, das besonders einfach, rasch und wirtschaftlich durchgeführt werden kann.

Diese Aufgabe wird durch ein Verfahren der angegebenen Art gelöst, das durch die folgenden Schritte gekennzeichnet ist:
1. Anordnen der Kunststoffplatten und Kunststofflamellenpakete derart, dass sich die Enden der Kunststofflamellen und die Kunststoffplatte mit geringem Abstand gegenüberliegen;
2. Einschieben einer Schweißplatte (eines Schweißspiegels) zwischen die Kunststoffplatte und die Enden der Kunststofflamellen;
3. Erhitzen der Schweißplatte;
4. Anpressen der Kunststoffplatte und der Enden der Kunststofflamellen an die Schweißplatte oder umgekehrt, um dadurch die Kunststoffplatte und die Enden der Kunststofflamellen auf eine zum Schweißen notwendige Temperatur zu erhitzen bzw. anzuschmelzen; und
5. Entfernen der Schweißplatte und Aneinanderpressen der Kunststoffplatte und der Enden der Kunststofflamellen zum Verschweißen derselben.

Gegenüber dem bekannten Verfahren, bei dem die Kunststofflamellen einzeln und manuell an die Kunststoffplatte geschweißt werden, macht das erfindungsgemäße Verfahren von dem an sich bekannten Spiegelschweißen Gebrauch, wobei mit einer Schweißplatte gleichzeitig mehrere Kunststofflamellen an eine Kunststoffplatte geschweißt werden. Die miteinander zu verschweißenden Enden der Kunststofflamellen und die Kunststoffplatte werden auf Abstand angeordnet, und es wird die Schweißplatte zwischen die Kunststoffplatte und die Enden der Kunststofflamellen geschoben. Die Schweißplatte wird dann erhitzt oder wird bereits im zumindest teilweise erhitzten Zustand zwischen die zu verschweißenden Teile geschoben. Es erfolgt dann ein Anpressen der Kunststoffplatte und der Enden der Kunststofflamellen an die Schweißplatte oder ein Anpressen der Schweißplatte an die zu verschweißenden Teile. Dabei umfasst das erfindungsgemäße Verfahren sowohl das gleichzeitige Anpressen beider Teile als auch das nacheinander erfolgende Anpressen. Einzelheiten zu diesem Verfahrensschritt werden später erläutert.

Nach dem Erhitzen bzw. Anschmelzen der miteinander zu verschweißenden Teile wird die Schweißplatte entfernt und werden die Teile gegeneinander gepresst, um sie miteinander zu verschweißen.

Es versteht sich, dass das erfindungsgemäße Verfahren wesentlich rascher abläuft als das bisher manuell durchgeführte Verfahren. Aufgrund der vorgenommenen Automatisierung lassen sich somit die entsprechenden Lamellen mit den entsprechenden Platten einfach, rasch und auf wirtschaftliche Weise miteinander verbinden.

Das erfindungsgemäße Verfahren umfasst zur Optimierung eine Vielzahl von Verfahrensvarianten, auf die nachfolgend eingegangen wird. So wird bei einer ersten Variante die Kunststoffplatte über eine längere Zeitdauer gegen die Schweißplatte gepresst als die Enden der Kunststofflamellen. Diese Verfahrensart kommt insbesondere dann zur Anwendung, wenn im Vergleich zur Kunststoffplatte dünne Lamellen stirnseitig angeschweißt werden sollen. Durch die kürzere Zeitdauer des Anpressens der Lamellen wird verhindert, dass die Lamellen im Vergleich zur dickeren Kunststoffplatte zu stark aufgeschmolzen werden. Die richtige Zeitdauer ist von den jeweiligen Materialstärken abhängig und lässt sich empirisch ermitteln.

Bei dieser Verfahrensvariante kann beispielsweise die Kunststoffplatte früher gegen die Schweißplatte gepresst werden als die Enden der Kunststofflamellen. Da die Schweißplatte gleichzeitig von beiden Teilen entfernt wird, ergeben sich so unterschiedlich lange Anpresszeiten, die aufgrund der verschiedenen Materialstärken zu einem relativ gleichmäßigen Anschmelzen beider Teile führen.

Als weitere Variante können hierbei die Enden der Kunststofflamellen auch früher von der Schweißplatte entfernt werden als die Kunststoffplatte, wodurch ein entsprechender Effekt erzielt wird.

Grundsätzlich können bei dem erfindungsgemäßen Verfahren die zu verschweißenden Teile gegen die Schweißplatte gepresst werden, oder die Schweißplatte kann (nacheinander) gegen die zu verschweißenden Teile gepresst werden. Bei einer anderen Variante kann ein zu verschweißendes Teil zuerst gegen die Schweißplatte gepresst werden, wonach die Schweißplatte zusammen mit dem angepressten Teil gegen das zweite zu verschweißende Teil, hierbei vorzugsweise die Enden der Kunststofflamellen, gepresst wird. Die zuletzt genannte Variante hat den Vorteil, das die Vielzahl der Kunststofflamellen während des Schweißverfahrens ortsfest angeordnet werden kann und nicht bewegt werden muss. Diese Lösung wird daher erfindungsgemäß bevorzugt, da hierdurch recht aufwendige Bewegungsmechanismen zur Bewegung des Kunststofflamellenpaketes entfallen können.

Bei dem erfindungsgemäßen Verfahren kann die Schweißplatte seitlich zwischen die zu verschweißenden Teile hineinbewegt werden. Bei einer anderen Ausführungsform wird die Schweißplatte von oben oder unten zwischen die zu verschweißenden Teile bewegt.

Je nach Ausführungsform sieht die Erfindung somit vor, dass sich die Schweißplatte in seitlicher Richtung, d.h. parallel zu ihrer Längsrichtung, in senkrechter Richtung, d.h. senkrecht zu ihrer Längsrichtung, und/oder in Querrichtung bewegt.

Noch eine andere Ausführungsform des erfindungsgemäßen Verfahrens sieht vor, dass die Kunststoffplatte mit einem größeren Anpressdruck gegen die Schweißplatte gedrückt wird als gegen die Enden der Kunststofflamellen. Hierdurch wird erreicht, dass die Kunststofflamellen, die dünner ausgebildet sind als die Kunststoffplatte, im Vergleich zur dickeren Kunststoffplatte nicht übermäßig stark angeschmolzen werden und sich zwischen Kunststofflamellen und Kunststoffplatte etwa gleichgroße Anschmelzbereiche ergeben. Natürlich ist diese Verfahrensvariante auch für den umgekehrten Fall geeignet, bei dem die Schweißplatte gegen die zu verschweißenden Teile gedrückt wird.

Da bei dem erfindungsgemäßen Verfahren gleichzeitig eine Vielzahl von Lamellen an eine Kunststoffplatte geschweißt wird, besteht das Problem, dass die Enden der Kunststofflamellen infolge von Fertigungs- und Montagetoleranzen nicht alle exakt in der gleichen Ebene liegen. Im Normalfall werden daher kürzere und längere Lamellen vorhanden sein. Um hierbei zu verhindern, dass kürzere Lamellen überhaupt nicht oder nur in unzureichender Weise mit der Kunststoffplatte verschweißt werden, sieht das erfindungsgemäße Verfahren vor, dass die Schweißplatte vorzugsweise so gegen die Enden der Kunststofflamellen gepresst wird, dass ein Kontakt mit dem Ende der kürzesten Lamelle erzielt wird, wobei ein geringfügiges Verbiegen der Enden der längeren Lamellen in Kauf genommen wird. Die Feststellung der kürzesten Lamelle kann dabei beispielsweise mit entsprechenden Detektionseinrichtungen, insbesondere optischen Detektionseinrichtungen, erfolgen, die eine entsprechende Bewegungssteuerung impliziert.

Das erfindungsgemäße Verfahren ist zum Verschweißen von ebenen Kunststoffplatten mit den Enden von Kunststofflamellen geeignet, die in einer ebenen Ebene liegen. Das erfindungsgemäße Verfahren findet jedoch auch zum Verschweißen einer in Längsrichtung gekrümmten Kunststoffplatte mit auf einer gekrümmten Bahn angeordneten Enden von Kunststofflamellen Verwendung, wobei eine gekrümmt Schweißplatte verwendet wird. Als Alternative wird hierbei erfindungsgemäß eine polygonförmig gestaltete Schweißplatte verwendet, die an die Krümmung der Kunststoffplatte und der gekrümmten Bahn, auf der die Enden der Kunststofflamellen liegen, angepasst ist. Vorzugsweise wird in diesem Fall auch eine polygonförmig gestaltete Kunststoffplatte angeschweißt.

Da derartige Tropfenabscheiderpakete in einer Vielzahl von Fällen mit gekrümmten Randplatten versehen werden müssen, ist die vorstehend aufgezeigte Variante des erfindungsgemäßen Verfahrens von besonderer Bedeutung. Um eine relativ aufwendige und komplizierte Ausgestaltung einer gekrümmten Schweißplatte (eines gekrümmten Schweißspiegels) zu verhindern, wird die Schweißplatte vorzugsweise in eine Vielzahl von ebenen Flächenbereichen aufgegliedert, d.h. polygonartig gestaltet, so dass sich die Schweißplatte der gewünschten Krümmung annähert. Vorzugsweise wird auch die anzuschweißende Kunststoffplatte entsprechend gegliedert, so dass sich auch in diesem Fall eine Annäherung an die gewünschte Krümmung der Platte ergibt. Da die Kunststofflamellen flexibel sind, können diese ohne weiteres auf einer gekrümmten Bahn enden, d.h. ein exaktes polygonartiges Zuschneiden ist hierbei nicht unbedingt erforderlich.

Das Einschieben und Entfernen der Schweißplatte erfolgt bei dieser Ausführungsform vorzugsweise von oben oder von unten, um große Bewegungsdistanzen der zu verschweißenden Teile zu vermeiden.

Die Erfindung betrifft ferner eine Vorrichtung zur Durchführung des vorstehend beschriebenen Verfahrens. Diese Vorrichtung weist eine Schweißplatte (einen Schweißspiegel), die entsprechend beheizt oder beheizbar ist, eine Bewegungseinrichtung für die Schweißplatte und/oder Bewegungseinrichtungen für die miteinander zu verschweißenden Teile, d.h. die Kunststofflamellenpakete und die Kunststoffplatte, auf. Bei den letztgenannten Bewegungseinrichtungen handelt es sich vorzugsweise um solche, die gleichzeitig die zu verschweißenden Teile gegen die Schweißplatte pressen, beispielsweise um solche, die entsprechende Anpressplatten aufweisen.

Erfindungsgemäß weist die Vorrichtung zur Durchführung des Verfahrens ferner eine Einrichtung zum Steuern der Bewegungszeitpunkte und Bewegungszeiten und/oder der Anpresszeitpunkte und Anpresszeiten und/oder der Anpressdrücke von Schweißplatte, Kunststofflamellen und/oder der Kunststoffplatte auf. Mit Hilfe dieser Steuereinrichtung werden die Schweißplatte und die zu verschweißenden Teile in ihren Bewegungsabläufen so gesteuert, dass sich optimale Schweißbedingungen ergeben. So wird beispielsweise bei einer bevorzugten Ausführungsform, bei der die Kunststofflamellenpakete stationär angeordnet sind und während des Schweißverfahrens stationär verbleiben, mit Hilfe der Steuereinrichtung die Schweißplatte zwischen die Enden der Kunststofflamellen und die Kunststoffplatte bewegt, die Kunststoffplatte gegen die Schweißplatte bewegt und an diese gepresst, die Schweißplatte zusammen mit der angepressten Kunststoffplatte gegen die Enden der Kunststofflamellen bewegt, nach Ablauf einer bestimmten Zeitspanne die Schweißplatte entfernt und die Kunststoffplatte gegen die Enden der Kunststofflamellen gepresst. Bei dieser Ausführungsform besitzt daher die Vorrichtung eine Einrichtung zum stationären Halten der Kunststofflamellen und eine Anpresseinrichtung für die Kunststoffplatte.

Vorzugsweise weist die Vorrichtung ferner eine Einrichtung zum Bewegen der Schweißplatte in Längsrichtung und/oder Querrichtung und/oder Vertikalrichtung auf. Wenn die Schweißplatte in allen drei Richtungen bewegbar ist, lassen sich hiermit verschiedene Verfahrensvarianten durchführen, wie vorstehend eingehend erläutert.

Eine weitere Ausführungsform der Erfindung sieht vor, dass die Vorrichtung eine polygonartig ausgebildete Schweißplatte aufweist. Hiermit lassen sich gekrümmte Kunststoffplatten mit in einer gekrümmten Bahn angeordneten Enden von Kunststofflamellen verschweißen, ohne dass eine aufwendig gestaltete gekrümmte Schweißplatte verwendet werden muss.

Natürlich schließt dies nicht aus, dass die erfindungsgemäße Vorrichtung auch eine gekrümmt ausgebildete Schweißplatte aufweisen kann.

Ferner besitzt die erfindungsgemäße Vorrichtung vorzugsweise eine Einrichtung zum Messen des größten Abstandes zwischen den Enden der Kunststofflamellen und der Schweißplatte und zum Steuern der Bewegung zwischen den Enden und der Schweißplatte derart, dass zum Anpressen eine Bewegung genau über diesen größten Abstand erfolgt. Hierdurch kann sichergestellt werden, dass auch bei unterschiedlich langen Lamellen jede Lamelle verschweißt wird.

Bei der gegliederten oder polygonartigen Ausgestaltung der Schweißplatte zum Verschweißen von gekrümmten Teilen kann die Schweißplatte sowohl einstückig ausgestaltet sein als auch aus mehreren aneinander montierten Segmenten bestehen.

Die erfindungsgemäß ausgebildete Vorrichtung weist in der Regel eine Schweißplatte auf, die auf beiden Seiten gleichzeitig die miteinander zu verschweißenden Teile erwärmt. Dies schließt nicht aus, dass bei der erfindungsgemäß ausgebildeten Vorrichtung auch zwei Schweißplatten verwendet werden können, die jeweils nur mit einer Seite mit dem zu verschweißenden Teil in Kontakt treten. Diese zwei Schweißplatten können beispielsweise gemeinsam bewegt und beispielsweise Rücken an Rücken fixiert sein oder aber auch unabhängig voneinander betätigt werden. Dabei können die beiden Schweißplatten natürlich auch mit unterschiedlichen Temperaturen und/oder Drücken betrieben werden, was sich besonders günstig auf den hier beschriebenen Anwendungsfall auswirkt.

Die Erfindung betrifft ferner eine spezielle Ausführungsform einer Vorrichtung, die ein Lagergestell, ein auf diesem verschiebbar gelagertes Führungselement, auf bzw. an dem eine Anpresseinrichtung (Pressplatte) angeordnet und benachbart hierzu eine zu verschweißende Kunststoffplatte anordbar sind, eine Einrichtung zum Fixieren und Bewegen einer Schweißplatte auf dem bzw. auf das Lagergestell und eine Einrichtung zum Fixieren der zu verschweißenden Kunststofflamellen auf dem Lagergestell aufweist. In Weiterbildung dieser Vorrichtung können auf jeder Seite eines zentral angeordneten Kunststofflamellenpaketes Führungselemente, Anpresseinrichtungen, Kunststoffplatten und Schweißplatten angeordnet sein, so dass mit dieser Vorrichtung gleichzeitig zwei Kunststoffplatten an ein Lamellenpaket von beiden Seiten angeschweißt werden können.

Die erfindungsgemäße Vorrichtung ermöglicht ferner das Fixieren bzw. Verspannen der Kunststofflamellen in einer Schweißstellung, wozu eine geeignete Halte/Spannvorrichtung Verwendung finden kann, die ein oberes und unteres Spannelement und/oder eine Schlitzleiste für die Kunststofflamellen aufweisen kann. Durch Verspannen mit Hilfe der Spannvorrichtung werden die Lamellen in eine gegeneinander und in Bezug auf das Lagergestell fixierte Stellung gebracht, so dass sie durch das Heranführen der Schweißplatte(n) und der Kunststoffplatte(n) nicht defixiert werden können. Die Schlitzleisten weisen entsprechende Schlitze auf, in die die Lamellenränder eingeführt werden. Durch Zusammenpressen der beweglich gelagerten Blöcke der Schlitzleisten werden die Lamellen mit entsprechendem Abstand voneinander fixiert.

Die Erfindung wird nachfolgend anhand von Ausführungsbeispielen in Verbindung mit der Zeichnung im einzelnen erläutert. Es zeigen:
- Figur 1: eine schematische Draufsicht auf die Haupt teile einer Vorrichtung zum Verschweißen von Kunststoffplatten mit winklig hierzu angeordneten Kunststofflamellenpaketen;
- Figur 2: eine Draufsicht wie Figur 1 einer anderen Ausführungsform einer derartigen Vorrichtung; und
- Figur 3: einen schematischen Querschnitt durch eine weitere Ausführungsform einer Vorrichtung zum Verschweißen von Kunststoffplatten.

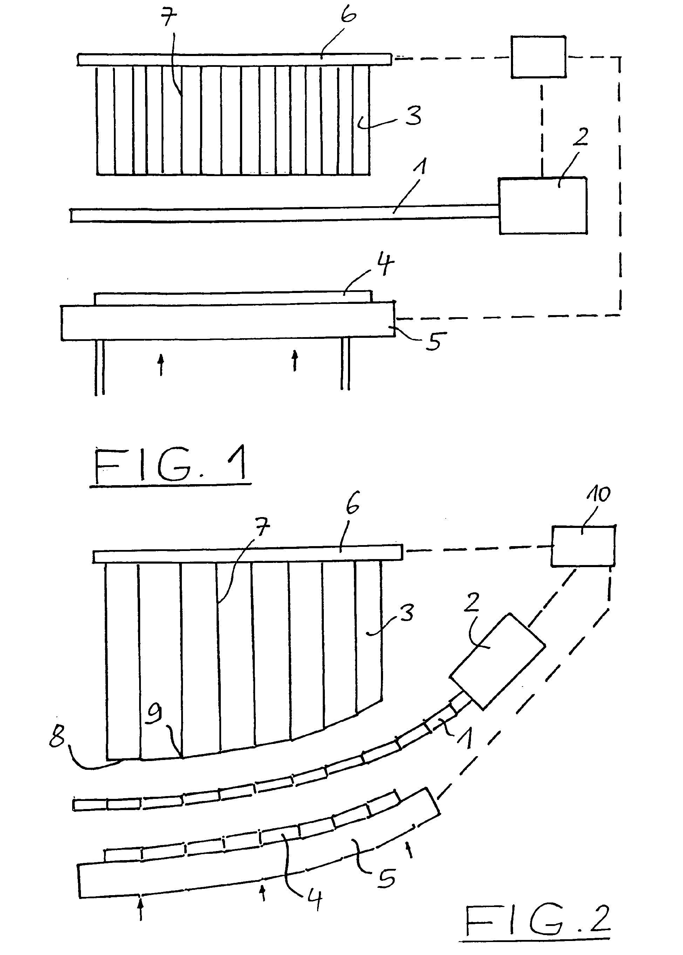

In Figur 1 ist ein Tropfenabscheiderpaket 3 schematisch dargestellt, das aus einer Vielzahl von parallel zueinander angeordneten Tropfenabscheiderlamellen 7 besteht. Diese Tropfenabscheiderlamellen sind bekannt und müssen hier im einzelnen nicht beschrieben werden. Es handelt sich hierbei um relativ dünne Lamellen aus einem thermoplastischen Kunststoff.

Des weiteren ist in Figur 1 eine Kunststoffplatte 4 dargestellt, die als Randplatte für die Tropfenabscheiderlamellenpakete 3 dient und mit den Enden der Kunststofflamellen zu verschweißen ist. Auch derartige als Randplatten dienende Kunststoffplatten 4 sind bekannt. Sie bestehen aus dem gleichen thermoplastischen Kunststoff wie die Lamellen 7.

Die Schweißvorrichtung weist eine Schweißplatte 1 auf, die über eine geeignete Bewegungseinrichtung 2 in seitlicher Richtung zwischen die Kunststoffplatte 4 und das Tropfenabscheiderlamellenpaket 3 schiebbar und wieder zurückziehbar ist. Bei der Schweißplatte 1 (Schweißspiegel) handelt es sich um eine beschichtete Metallplatte mit einem eingebauten Heizelement. Durch Einschalten des Heizelementes kann die Schweißplatte auf eine zum Schweißen notwendige Temperatur erhitzt werden.

Ferner umfasst die Vorrichtung eine schematisch dargestellte Bewegungs/Anpresseinrichtung 5 für die Kunststoffplatte 4 und eine schematisch dargestellte Bewegungs/Anpresseinrichtung 6 für das Kunststofflamellenpaket 3. Mit Hilfe dieser Bewegungs/Anpresseinrichtungen 5, 6 können die zu verschweißenden Teile senkrecht zur Schweißplatte 1 bewegt und gegen die Schweißplatte sowie gegeneinander gepresst werden.

Bei der hier dargestellten Vorrichtung wird die Schweißplatte 1 mit Hilfe der Bewegungseinrichtung 2 zwischen das Lamellenpaket 3 und die Kunststoffplatte 4 bewegt. Der Abstand zwischen dem Lamellenpaket 3 und der Kunststoffplatte 4 ist in der Darstellung aus Klarheitsgründen vergrößert gezeigt. Durch Einschalten des Heizelementes wird die Schweißplatte auf die zum Schweißen erforderliche Temperatur erhitzt. Natürlich kann der Erhitzungsvorgang auch bereits vor dem Einschieben der Schweißplatte gestartet werden.

Wenn die Schweißplatte 1 die entsprechende Schweißtemperatur erreicht hat oder auch davor wird als erstes die Kunststoffplatte 4 mit Hilfe der Bewegungs/Anpresseinrichtung 5 gegen die Schweißplatte 1 gepresst. Hierdurch wird die Kunststoffplatte 4 auf die zum Schweißen erforderliche Temperatur erhitzt bzw. angeschmolzen. Kurz darauf wird auch das Kunststofflamellenpaket 3 mit Hilfe der Bewegungs/Anpresseinrichtung 6 gegen die Schweißplatte 1 bewegt und gegen diese gepresst, um die Enden der Lamellen auf die Schweißtemperatur zu erhitzen bzw. anzuschmelzen. Der zeitliche Abstand zwischen dem Anpressen der Kunststoffplatte 4 und dem Anpressen des Kunststofflamellenpaketes 3 wird dabei so gewählt, dass die Lamellen 7, die wesentlich dünner ausgebildet sind als die Kunststoffplatte 4, etwa gleichstark angeschmolzen werden wie die Kunststoffplatte. Auf diese Weise wird eine zu starke Verformung der relativ dünnen Lamellen verhindert.

Nach dem ausreichenden Anschmelzen wird die Schweißplatte 1 wieder aus dem Zwischenraum zwischen den zu verschweißenden Teilen entfernt, und die Teile werden über die Bewegungs/ Anpresseinrichtungen 5, 6 gegeneinander bewegt und gegeneinander gepresst, wobei die Stirnenden der Lamellen 7 etwa rechtwinklig mit der Kunststoffplatte 4 verschweißt werden. Nach entsprechendem Abkühlen werden die Teile aus der Vorrichtung entfernt, und es werden ein neues Lamellenpaket und eine neue Kunststoffplatte in dieser angeordnet.

Bei der in Figur 1 dargestellten Vorrichtung kann die Bewegungseinrichtung 2 für die Schweißplatte 1 auch so ausgebildet sein, dass sie die Schweißplatte 1 in senkrechter Richtung (senkrecht zur Zeichnungsebene) oder quer zu ihrer Längsachse bewegen kann. So kann beispielsweise auch die Kunststoffplatte 4 zuerst gegen die Schweißplatte 1 gepresst werden, wonach die Schweißplatte 1 mit angepresster Kunststoffplatte 4 in Querrichtung gegen die Enden der Lamellen 7 bewegt wird. Bei dieser Variante kann daher das Lamellenpaket 3 stationär angeordnet sein, da nach dem Entfernen der Schweißplatte 1 die Kunststoffplatte 4 über deren Bewegungs/Anpresseinrichtung 5 gegen die Enden der Lamellen bewegt und gegen diese gepresst wird.

Die in Figur 2 dargestellte Vorrichtung entspricht in ihrem Aufbau im wesentlichen der Vorrichtung der Figur 1 mit dem Unterschied, dass sich hierbei die Enden 9 der Lamellen 7 auf einer gekrümmten Bahn 8 befinden und diese Enden mit einer entsprechend gekrümmten Kunststoffplatte (Randplatte) 4 verschweißt werden sollen. Hierzu weist die erfindungsgemäß ausgebildete Vorrichtung eine in einzelne Segmente untergliederte, d.h. polygonförmig ausgebildete, Schweißplatte 1 auf. Ferner kommt eine entsprechend ausgebildete, d.h. ebenfalls in einzelne ebene Segmente aufgegliederte Kunststoffplatte 4 zum Einsatz.

Bei dieser Ausführungsform wird die Schweißplatte 1 von oben zwischen das Lamellenpaket 3 und die Kunststoffplatte 4 geführt und auf die Schweißtemperatur erhitzt. Mit Hilfe der Bewegungs/Anpresseinrichtungen 5, 6 werden zuerst die polygonartig ausgebildete Kunststoffplatte 4 und danach das Lamellenpaket 3 gegen die Schweißplatte 1 bewegt und gegen diese gepresst. Nach dem Erwärmen auf die Schweißtemperatur der Lamellen und der Kunststoffplatte wird die Schweißplatte 1 nach oben entfernt, wonach die Kunststoffplatte 4 gegen die Enden 9 der Lamellen gepresst wird, um einen Schweißvorgang durchzuführen.

Auch die in Figur 2 gezeigte Vorrichtung kann in der vorstehend beschriebenen Weise variiert werden.

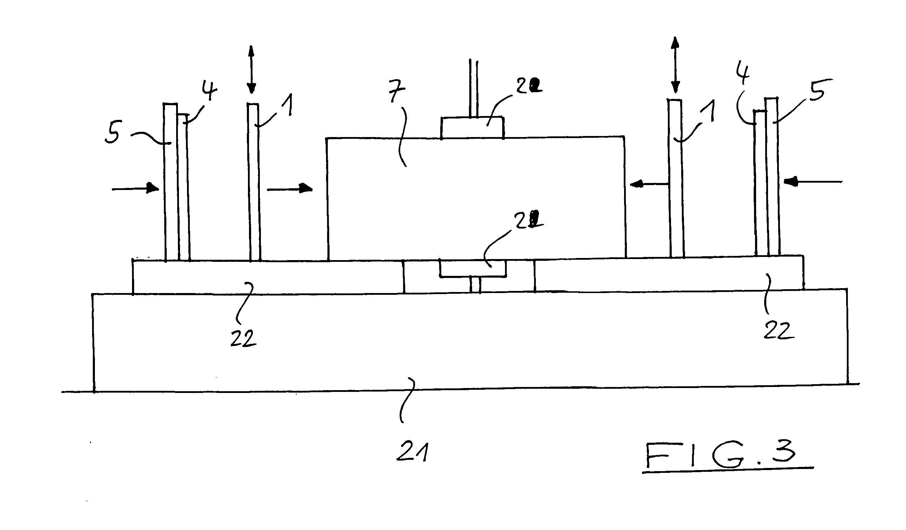

Eine weitere Ausführungsform einer Vorrichtung zum Verschweißen von Kunststoffplatten mit winklig hierzu angeordneten Kunststofflamellenpaketen ist in Figur 3 dargestellt. Die hier gezeigte Vorrichtung besitzt ein Lagergestell 21, auf dem beidseitig Führungsstangen 22 angeordnet sind, auf denen Anpressplatten 5 verschiebbar gelagert sind. Die in der Figur links und rechts gezeigten Anpressplatten 5 sind somit in Pfeilrichtung zur Mitte der Figur hin verschiebbar. An jeder Anpressplatte 5 befindet sich eine Kunststoffplatte 4, die mit dem Lamellenpaket zu verschweißen ist. Die Kunststoffplatten 4 sind in geeigneter Weise an den Anpressplatten 5 fixiert.

Mit 1 sind zwei Schweißplatten bezeichnet, die von oben bzw. von der Seite in die gezeigte Stellung bewegbar sind. In der Mitte befindet sich auf dem Lagergestell 21 ein Paket aus Kunststofflamellen 7, die mit den Kunststoffplatten 4 verschweißt werden sollen. Die Lamellen 7 werden über ein oberes und unteres Spannelement 20 verspannt bzw. fixiert, so dass sie beim Verschweißen nicht bewegt werden können.

Die Spannelemente 20 sind beispielsweise mit sogenannten Schlitzleisten versehen, die die Ränder der Lamellen aufnehmen und bewegliche Blöcke aufweisen, welche gegen die Ränder gepresst werden können.

Wenn sich die Schweißplatten 1 in der in Figur 3 gezeigten Stellung befinden, werden die Pressplatten 5 mit den Kunststoffplatten 4 auf den Führungsstangen in Pfeilrichtung bewegt. Ferner werden die Schweißplatten 1 entweder eigenständig oder ebenfalls mit Hilfe der Pressplatten 5 gegen die Ränder der Kunststofflamellen 7 bewegt. Nach dem Aufschmelzen der Lamellenränder und der Kontaktfläche der Kunststoffplatten werden die Schweißplatten entfernt und die Kunststoffplatten gegen die Lamellenränder gepresst. Durch Zurückfahren der Pressplatten 5 wird das fertige Lamellenpaket mit Endwänden freigegeben und kann vom Lagergestell entfernt werden.

Das Verfahren und die Vorrichtung können ferner dazu eingesetzt werden, stabilisierende Elemente mit den Kunststoffplatten und/oder Kunststofflamellen zu verschweißen.

## Patentansprüche

1. Verfahren zum Verschweißen von Kunststoffplatten mit winklig dazu angeordneten Kunststofflamellenpaketen von Tropfenabscheidereinheiten und dergleichen Einheiten, **gekennzeichnet durch** die folgenden Schritte:
1. Anordnen der Kunststoffplatten und Kunststofflamellenpakete derart, dass sich die Enden der Kunststofflamellen und die Kunststoffplatte mit geringem Abstand gegenüberliegen;
2. Einschieben einer Schweißplatte (eines Schweißspiegels) zwischen die Kunststoffplatte und die Enden der Kunststofflamellen;
3. Erhitzen der Schweißplatte;
4. Anpressen der Kunststoffplatte und der Enden der Kunststofflamellen an die Schweißplatte oder umgekehrt, um **dadurch** die Kunststoffplatte und die Enden der Kunststofflamellen auf eine zum Schweißen notwendige Temperatur zu erhitzen bzw. anzuschmelzen; und
5.Entfernen der Schweißplatte und Aneinanderpressen der Kunststoffplatte und der Enden der Kunststofflamellen zum Verschweißen derselben.

2. Verfahren nach Anspruch 1, **dadurch gekennzeichnet, dass** die Kunststoffplatte über eine längere Zeitdauer gegen die Schweißplatte gepresst wird als die Enden der Kunststofflamellen.

3. Verfahren nach Anspruch 1 oder 2, **dadurch gekennzeichnet, dass** die Kunststoffplatte früher gegen die Schweißplatte gepresst wird als die Enden der Kunststofflamellen.

4. Verfahren nach Anspruch 1 oder 2, **dadurch gekennzeichnet, dass** die Enden der Kunststofflamellen früher von der Schweißplatte entfernt werden als die Kunststoffplatte.

5. Verfahren nach einem der vorangehenden Ansprüche, **dadurch gekennzeichnet, dass** die Kunststoffplatte mit einem größeren Anpressdruck gegen die Schweißplatte gepresst wird als gegen die Enden der Kunststofflamellen.

6. Verfahren nach einem der Ansprüche 1 bis 3 oder 5, **dadurch gekennzeichnet, dass** die Kunststofflamellen während des Schweißverfahrens ortsfest angeordnet werden.

7. Verfahren nach einem der vorangehenden Ansprüche, **dadurch gekennzeichnet, dass** die Kunststoffplatte zuerst gegen die Schweißplatte gepresst wird, wonach die Schweißplatte mit angepresster Kunststoffplatte gegen die Enden der Kunststofflamellen gepresst wird.

8. Verfahren nach einem der vorangehenden Ansprüche, **dadurch gekennzeichnet, dass** die Schweißplatte so gegen die Enden der Kunststofflamellen gepresst wird, dass ein Kontakt mit dem entferntesten Lamellenende erzielt wird, wobei ein geringfügiges Verbiegen der Enden der anderen Lamellen in Kauf genommen wird.

9. Verfahren nach einem der vorangehenden Ansprüche, **dadurch gekennzeichnet, dass** zum Verschweißen einer in Längsrichtung gekrümmten Kunststoffplatte mit auf einer gekrümmten Bahn angeordneten Enden von Kunststofflamellen eine gekrümmte Schweißplatte verwendet wird.

10. Verfahren nach einem der Ansprüche 1 bis 8, **dadurch gekennzeichnet, dass** zum Verschweißen einer Kunststoffplatte mit auf einer gekrümmten Bahn angeordneten Enden von Kunststofflamellen eine polygonförmig gestaltete Schweißplatte verwendet wird.

11. Verfahren nach Anspruch 10, **dadurch gekennzeichnet, dass** eine polygonförmig gestaltete Kunststoffplatte angeschweißt wird.

12. Verfahren nach einem der vorangehenden Ansprüche, **dadurch gekennzeichnet, dass** die Schweißplatte senkrecht zu ihrer Längsachse, d.h. nach oben oder nach unten, eingeschoben und/oder entfernt wird.

13. Vorrichtung zur Durchführung des Verfahrens nach einem der vorangehenden Ansprüche, **dadurch gekennzeichnet, dass** sie eine Einrichtung (10) zum Steuern der Bewegungszeitpunkte und Bewegungszeiten und/oder der Anpresszeitpunkte und Anpresszeiten und/oder der Anpressdrücke von Schweißplatte (1), Kunststofflamellen (7) und/oder der Kunststoffplatte (4) aufweist.

14. Vorrichtung nach Anspruch 13, **dadurch gekennzeichnet, dass** sie eine Einrichtung zum stationären Halten der Kunststofflamellen (7) und eine Bewegungs/Anpresseinrichtung (5) für die Kunststoffplatte (4) aufweist.

15. Vorrichtung nach Anspruch 13 oder 14, **dadurch gekennzeichnet, dass** sie eine Einrichtung (2) zum Bewegen der Schweißplatte (1) in Längsrichtung und/oder Querrichtung und/oder Vertikalrichtung aufweist.

16. Vorrichtung nach einem der Ansprüche 13 bis 15, **dadurch gekennzeichnet, dass** sie eine polygonartig ausgebildete Schweißplatte (1) aufweist.

17. Vorrichtung nach einem der Ansprüche 13 bis 16, **dadurch gekennzeichnet, dass** sie eine Einrichtung zum Messen des größten Abstandes zwischen den Enden der Kunststofflamellen (7) und der Schweißplatte (1) und zum Steuern der Bewegung zwischen den Enden und der Schweißplatte (1) derart, dass zum Anpressen eine Bewegung genau über diesen größten Abstand erfolgt, aufweist.

18. Vorrichtung nach einem der Ansprüche 13 bis 17, **dadurch gekennzeichnet, dass** sie ein Lagergestell (21), ein auf diesem verschiebbar gelagertes Führungselement (22), auf bzw. an dem eine Anpresseinrichtung (Pressplatte 5) angeordnet und benachbart hierzu eine zu verschweißende Kunststoffplatte (4) anordbar sind, eine Einrichtung zum Fixieren und Bewegen einer Schweißplatte (1) auf dem bzw. auf das Lagergestell und eine Einrichtung zum Fixieren der zu verschweißenden Kunststofflamellen (7) auf dem Lagergestell aufweist.

19. Vorrichtung nach einem der Ansprüche 13 bis 18, **dadurch gekennzeichnet, dass** die Kunststofflamellen (7) durch eine Halte/Spannvorrichtung in einer Schweißstellung fixierbar sind.

20. Vorrichtung nach Anspruch 19, **dadurch gekennzeichnet, dass** die Halte/Spannvorrichtung ein oberes und unteres Spannelement (20) umfasst.

21. Vorrichtung nach Anspruch 19 oder 20, **dadurch gekennzeichnet, dass** die Spannvorrichtung eine Schlitzleiste für die Kunststofflamellen (7) aufweist.
